# EUROPEAN PATENT APPLICATION

(11) **EP 0 600 497 A2**
(43) Date of publication of application: **08.06.1994**
(21) Application number: 93119469.0
(22) Date of filing: 02.12.1993
(51) Int. Cl.: G11B 19/00, G11B 25/04, G11B 5/00, G06F 3/06, G11B 19/02

(54) **Disk drive controlling microcomputer**

(30) Priority: 04.12.1992 JP 325131/92; 06.01.1993 JP 447/93
(71) Applicant: NEC CORPORATION, Tokyo (JP)
(72) Inventor: Katsuta, Hiroshi, Minato-ku, Tokyo (JP); Matsushima, Osamu, Minato-ku, Tokyo (JP)
(74) Representative: Betten & Resch

(57) **Abstract**

A disk controlling microcomputer is provided for controlling operation of a head-disk assembly (18) incorporating a disk, head and drive means therefore and reading and writing operation of an external system (70) with respect to the disk. The disk controlling microcomputer (12) includes an instruction executing portion (106) reading instructions in order and performing servo control process for performing head positioning and command control process corresponding to read and write command from the external system, a format control portion (122) performing, on the basis of an instruction execution control signal, reading and writing operation with respect to the disk and conversion from serial data to parallel data, and an interface (120) for controlling, on the basis of the instruction execution control signal, operation for receiving command from the external system and data transfer process to the external system.

## Description

### BACKGROUND OF THE INVENTION

### FIELD OF THE INVENTION

The present invention relates generally to a disk drive and a microcomputer for controlling the same. More specifically, the invention relates to a microcomputer having a function for head positioning control and control process corresponding to commands.

### DESCRIPTION OF THE RELATED ART

In the recent years, Office Automation (OA) equipments, such as personal computers, work stations and so forth, have been rapidly improved for higher performance, reducing of size and weight associating with technical innovation of a semiconductors and so forth. On the other hand, information per se to be processed by such OA equipments is becoming remarkably high density and large capacity. Therefore, needs for high speed, compact and large capacity filing device (magnetic disk drive or so forth) is rapidly growing.

As currently available filing devices, a magnetic hard disk drive has been primarily employed for advantages in a cost per bit and in performance. For instance, in the application for personal computers, the disk drives have already moved from 3.5-inch type to 2.5-inch type and even 1.8-inch type becoming available.

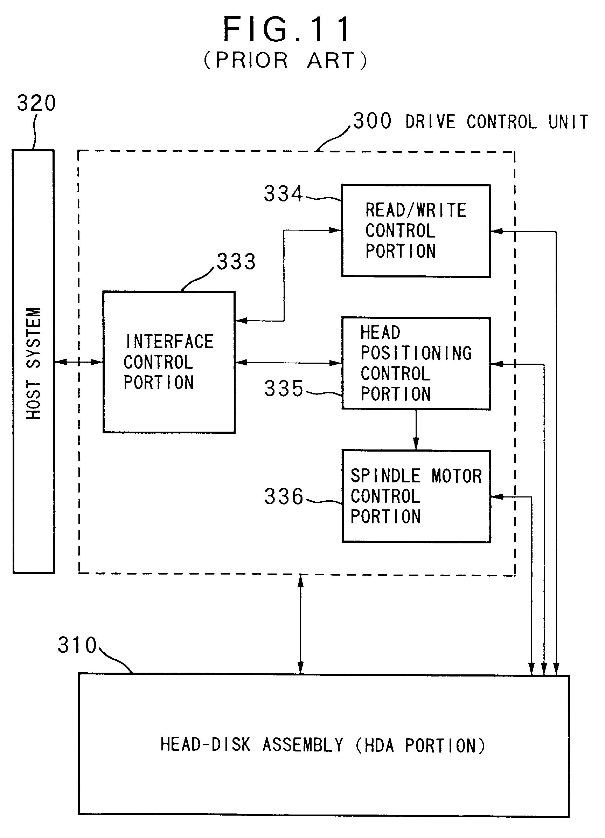

Fig. 11 is a block diagram showing a fundamental construction of the conventional hard disk drive which generally comprises a drive control unit 300 and a headdisk assembly (HDA) 310. 320 denotes a host system for reading and writing of data for the disk drive. Though illustration is neglected, the HDA 310 comprises respective units of a magnetic disk, a magnetic head, a drive means constituted of a spindle motor or a voice coil motor for driving the former and access mechanism. The HDA 310 is generally formed into a form of enclosure.

The drive control unit 300 includes an interface control portion 333, a read/write control portion 334, a head positioning control portion 335 and a spindle motor control portion 336.

The interface control portion 333 performs decoding of a command designating reading and writing operation from the host system 320, control process according to the command, control of reporting of a result of data transfer and command execution between the host system 320 and the magnetic disk via an internal buffering RAM. These control can be realized by a firmware process employing an interface controlling microcomputer within the unit.

The read/write control portion 334 is connected to the interface control portion 333 and the HDA 310 respectively and performs control of writing in the magnetic disk via the magnetic head with modulation of the data transferred from the host system 320, and of demodulating the data read out from the magnetic disk via the magnetic head.

The head positioning control portion 335 is connected to the interface control portion 333 and the HDA 310 respectively to perform a servo control to shift the magnetic head to a target track on the magnetic disk (seek operation) and to keep the magnetic head to follow the center of the target track (follow operation). These control can be realized by a digital PID control by an arithmetic process of a servo controlling microcomputer.

The spindle motor control portion 336 is connected to the HDA 310 and the head positioning control portion 335 respectively to perform motor speed control for the spindle motor employing a PWM timer within the unit and control of starting and stopping of the motor via the servo controlling microcomputer.

In the above-mentioned conventional magnetic disk device, two kinds of controlling processors (abovementioned interface controlling microcomputer and servocontrolling microprocessor) are employed for performing control process corresponding to read/write command from the host system and head positioning control. Generally, the head positioning control is taken place cyclically at a constant interval according to rotation of the magnetic disk and the control process corresponding to the read/write command is temporarily caused irregularly in response to operation of the host system. Since two kinds of microcomputers are specifically employed with respect to the process occurring periodically and irregularly on temporary basis, it is wasteful for not effectively using the processing performance of respective microcomputers.

On the other hand, even only for microcomputers. at least two LSIs are required. In addition thereto, LSIs are required respectively for interface control, servo control and spindle control to results in large hardware amount. For instance, upon downsizing the disk drive from 2.5-inch type into 1.8-inch type, it is significantly disadvantageous in view of installation area.

Furthermore, in application of the hard disk drive for a notebook type personal computer or palm-top type personal computer, greater number of LSIs should cause larger power consumption and high cost to be defective both in utility and economy.

### SUMMARY OF THE INVENTION

The first object of the present invention is to solve the above-mentioned problems and to provide a disk drive and a disk controlling microcomputer which can effectively use the performance of the microcomputer by performing control process corresponding to a read/write command and a head positioning process with a single microcomputer.

The second object of the present invention is to provide a disk drive and the disk controlling microcomputer which can contribute for downsizing of device and realizing lower power consumption and low price by reducing hardware amount.

In order to accomplish the above-mentioned and other objects, a disk drive, according to one aspect of the invention, comprises:
a head-disk assembly incorporating a disk, a head for reading and writing data out and in the disk, and drive means for the disk and the head;
drive control means for controlling operation of the head-disk assembly and read/write operation with respect to the disk from an external system;
the drive control means including a single disk controlling microcomputer, which comprises:
instruction storage means for storing instructions for controlling the operation of the head disk assembly and the operation of reading and writing;
instruction executing means for reading out the instruction from the storage means in order, servo control process for positioning the head and a command control process corresponding to the read/write command from the external system;
format control means connected to a the headdisk assembly and the instruction executing portion and controls the reading and writing operation for the disk and conversion from a serial data into a parallel data; and
interface means connected to the instruction executing portion and the external system for controlling operation of command reception from the external device and a data transfer process to the external system.

In the preferred construction, the disk controlling microcomputer comprises:
an A/D converter for inputting control information read from the disk of the head-disk assembly and necessary for head positioning servo control; and
a D/A converter for outputting a head positioning servo control information calculated on the basis of the control information necessary for servo control.

In the preferred construction, the format control means is electrically connected to the A/D converter and the format control means includes means for outputting a timing signal designating conversion initiation timing of the A/D converter.

In the preferred construction, the drive control means includes buffer means for temporarily storing write data from the external system and read data from the disk for adjusting transfer speed and transfer timing between the external system and the disk; and
the disk controlling microcomputer includes buffer control means connected to the buffer means for controlling access to the buffer means from the instruction executing means, the format control means and the interface means.

In the preferred construction, the format control means comprises:
drive data transfer means for performing data transfer process during read/write operation for the disk and serial-parallel conversion of data;
error correction control means for performing error code generating process during data writing in the disk and data error detection and correction process based on the error code;
storage means for storing instructions for controlling reading and writing by loading the instructions by an instruction execution control signal of the instruction executing means; and
control means for reading out the instructions stored in the storage means and controlling reading and writing operation, and
the interface means comprises:
means for storing read/write command fed from the external system and notifying reception of the read/write command to the instruction executing means.

In the preferred construction, the buffer control means comprises:
means for performing preferential order control for assigning access right for the instruction executing means, the format control means and the interface means at the occurrence of access demand therefrom.

In the preferred construction, the drive control means includes buffer means for temporarily storing write data from the external system and read data from the disk for adjusting transfer speed and transfer timing between the external system and the disk;
the disk controlling microcomputer includes buffer control means connected to the buffer means for controlling access to the buffer means from the instruction executing means, the format control means and the interface means;
the format control means comprises:
drive data transfer means for performing data transfer process during read/write operation for the disk and serial-parallel conversion of data;
error correction control means for performing error code generating process during data writing in the disk and data error detection and correction process based on the error code;
storage means for storing instructions for controlling reading and writing by loading the instructions by an instruction execution control signal of the instruction executing means; and
control means for reading out the instructions stored in the storage means and controlling reading and writing operation;
the interface means comprises:
means for storing read/write command fed from the external system and notifying reception of the read/write command to the instruction executing means; and
the buffer control means comprises:
means for performing preferential order control for assigning access right for the instruction executing means, the format control means and the interface means at the occurrence of access demand therefrom.

In the preferred construction, the disk controlling microcomputer comprises:
interrupt control means inputting the command reception signal from the interface means or a servo control signal read from the disk of the head-disk assembly for outputting an interrupt demand for command control process or servo control process to the instruction executing means corresponding to input command reception signal or the servo control signal.

According to another aspect of the invention, a disk controlling microcomputer for a disk drive, controlling operation of a head-disk assembly including a disk, a head for reading and writing data with respect to the disk and drive means for the disk and the head, and read/write operation of an external system with respect to the disk, comprises:
instruction storage means for storing instructions for controlling the operation of the head disk assembly and the operation of reading and writing;
instruction executing means for reading out the instruction from the storage means in order, servo control process for positioning the head and a command control process corresponding to the read/write command from the external system;
format control means connected to a the head-disk assembly and the instruction executing portion and controlling the reading and writing operation for the disk and conversion from a serial data into a parallel data; and
interface means connected to the instruction executing portion and the external system for controlling operation of command reception from the external device and a data transfer process to the external system.

Preferably, the disk controlling microcomputer further comprises:
an A/D converter for inputting control information read from the disk of the head-disk assembly and necessary for head positioning servo control; and
a D/A converter for outputting a head positioning servo control information calculated on the basis of the control information necessary for servo control.

In the preferred construction, the format control means is electrically connected to the A/D converter and the format control means includes means for outputting a timing signal designating conversion initiation timing of the A/D converter.

In the preferred construction, the disk controlling microcomputer further comprises buffer control means connected to buffer means for controlling access to the buffer means from the instruction executing means, the format control means and the interface means, the buffer means temporarily storing write data from the external system and read data from the disk for adjusting transfer speed and transfer timing between the external system and the disk.

In the preferred construction, the format control means comprises:
drive data transfer means for performing data transfer process during read/write operation for the disk and serial-parallel conversion of data;
error correction control means for performing error code generating process during data writing in the disk and data error detection and correction process based on the error code;
storage means for storing instructions for controlling reading and writing by loading the instructions by an instruction execution control signal of the instruction executing means; and
control means for reading out the instructions stored in the storage means and controlling reading and writing operation, and
the interface means comprises:
means for storing read/write command fed from the external system and notifying reception of the read/write command to the instruction executing means.

In the preferred construction, the buffer control means comprises:
means for performing preferential order control for assigning access right for the instruction executing means, the format control means and the interface means at the occurrence of access demand therefrom.

In the preferred construction, the disk controlling microcomputer further comprises
buffer control means connected to buffer means for controlling access to the buffer means from the instruction executing means, the format control means and the interface means, the buffer means temporarily storing write data from the external system and read data from the disk for adjusting transfer speed and transfer timing between the external system and the disk;
the format control means comprises:
drive data transfer means for performing data transfer process during read/write operation for the disk and serial-parallel conversion of data;
error correction control means for performing error code generating process during data writing in the disk and data error detection and correction process based on the error code;
storage means for storing instructions for controlling reading and writing by loading the instructions by an instruction execution control signal of the instruction executing means; and
control means for reading out the instructions stored in the storage means and controlling reading and writing operation;
the interface means comprises:
means for storing read/write command fed from the external system and notifying reception of the read/write command to the instruction executing means; and
the buffer control means comprises:
means for performing preferential order control for assigning access right for the instruction executing means, the format control means and the interface means at the occurrence of access demand therefrom.

In the preferred construction, the disk controlling microcomputer further comprises
interrupt control means inputting the command reception signal from the interface means or a servo control signal read from the disk of the head-disk assembly for outputting an interrupt demand for command control process or servo control process to the instruction executing means corresponding to input command reception signal or the servo control signal.

Other objects, advantages and effect of the present invention will become clear from the detailed description given herebelow.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a block diagram illustrating the construction of the first embodiment of a disk controlling microcomputer according to the present invention;
Fig. 2 is a block diagram showing the overall construction of a disk drive employing the disk controlling microcomputer of Fig. 1;
Fig. 3 is a block diagram illustrating a construction of a host interface portion of the disk controlling microcomputer of Fig. 1;
Fig. 4 is a block diagram illustrating a construction of a buffer control portion of the disk controlling microcomputer of Fig. 1;
Fig. 5 is a block diagram illustrating a construction of a format control portion of the disk controlling microcomputer of Fig. 1;
Fig. 6 is a flowchart showing a content of read process of the disk controlling microcomputer of Fig. 1;
Fig. 7 is a flowchart showing a content of a main process of the disk controlling microcomputer of Fig. 1;
Fig. 8 is a flowchart showing a content of an command receiving interrupt process of the disk controlling microcomputer of Fig. 1;
Fig. 9 is a flowchart showing a content of a head positioning servo interruption process of the disk controlling microcomputer of Fig. 1;
Fig. 10 is a block diagram illustrating a partial construction of the second embodiment of a disk controlling microcomputer according to the present invention; and
Fig. 11 is a block diagram showing a fundamental construction of the conventional disk drive.

### DESCRIPTION OF THE PREFERRED EMBODIMENT

The preferred embodiments of the present invention will be discussed with reference to the drawings.

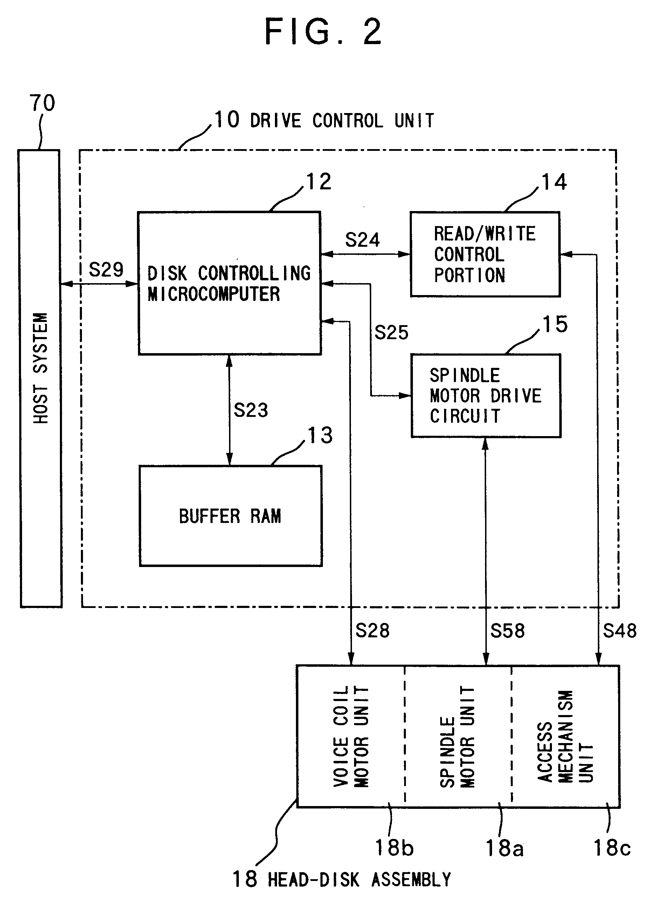

At first, the overall construction of a disk drive, to which the present invention is applied, is illustrated in Fig. 2. A drive controlling unit 10 of a hard disk drive employing a disk controlling microcomputer according to the present invention, is connected to respective head-drive unit in a head-disk assembly (HDA) 18 and a host system 70.

The HDA 18 includes a spindle motor unit 18a for driving a magnetic disk, a voice coil motor unit 18b for driving a magnetic head and an access mechanism unit 18c. The HDA 18 is of the form of enclosure type.

The drive control unit 10 built in a single disk controlling microcomputer 12, a buffering RAM 13, a read/write control portion 14 and a spindle motor drive circuit 15.

The disk controlling microcomputer 12 performs decoding of a command designating reading and writing operation of a disk data from the host system 70, a command control process for generating a control signal corresponding to the command, a data transfer between the host system - magnetic disk via the buffering RAM 13, reporting of the result of execution of the command to the host system 70, a servo control for a seek operation and follow operation for positioning the magnetic head, and start and stop control of the spindle motor.

The buffering RAM 13 is a memory for adjusting a transfer speed and a transfer timing difference between the host system and the magnetic disk. The read/write control portion 14 performs control for transmitting data to the magnetic head with modulation of data to be written in the magnetic disk, control for demodulating the data read from the magnetic disk via the magnetic head, separation of an information read from the disk into a disk control information, such as a servo control information and a data information, and generation of a synchronizing pulse signals, such as a selector signal, servo timing signal and so forth.

The spindle motor drive circuit 15 converts a PWM pulse into a motor drive current and performs a control to detect occurrence of a counter electromotive voltage from the spindle motor to notice to the microcomputer 12.

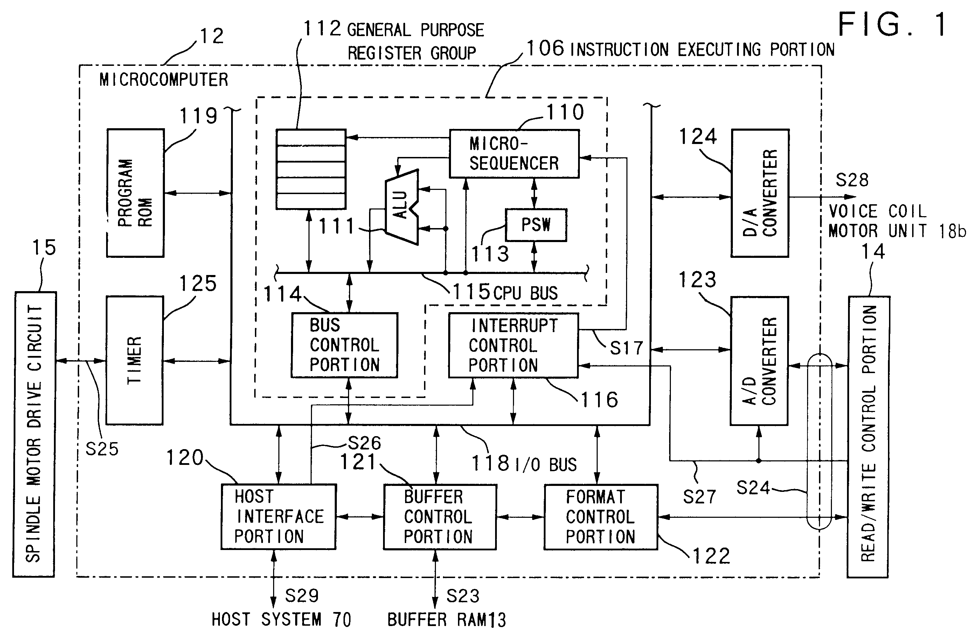

Fig. 1 shows a construction of the disk controlling microprocessor 12. The disk controlling microcomputer 12 controls operation of the head-disk assembly (HDA) 18 incorporating a head and disk shown in Fig. 2 and read/write operation for the disk in response to a signal S29 between host microcomputers in the host system 70. A single instruction executing portion 106 of the microcomputer 12 decodes the instruction in order, performs arithmetic operation and data transfer to execute the servo control process for head positioning and the command control process corresponding to the command supplied from an external system.

An A/D converter 123 is connected to the head-disk assembly 18 and the instruction executing portion 106 for inputting control information necessary for servo control to position the head. Also, a D/A converter 124 is connected to the head-disk assembly 18 and the instruction executing portion 106 for outputting the result of servo control (signal 28) for positioning the head.

The format control portion 122 is connected to the head-disk assembly 18 and the instruction executing portion 106 to perform control of the reading and writing operation of a serial data for the disk and of serial-parallel data conversion (for example, conversion from bit data into bite data).

The host interface portion 120 is connected to the instruction executing portion 106 and the external host system 70. Under control of the instruction executing portion 106, it controls command receiving operation and data transferring operation to the host system 70.

The buffer control portion 121 is connected to the buffering RAM 13 for controlling read/write operation to the buffering RAM 13 from the format control portion 122, the host interface portion 120 and the instruction executing portion 106.

The disk controlling microcomputer 12 exchanges the signal S29 with the host system 70, a signal S23 with the buffering RAM 13, a signal S24 with the read/write portion, and a signal 28 with the voice coil unit 18b of the HDA 18,

The instruction executing portion 106 of the disk controlling microcomputer includes a micro-sequencer 110, an ALU (arithmetic and logic unit) 111, a general register group 112, a PSW (program status word) 113 and a bus control portion 114. Each portion is connected to the other via a CPU bus 115 so that instruction codes stored in a program ROM 119 is read out via an I/O bus 118 to execute process of data transfer, arithmetic and logic operation and so forth.

The micro-sequencer 110 decodes the instruction code read via the bus control portion 114 and the CPU bus 115 and executes the process by controlling the ALU 111 and the general register group 112. When a process for one instruction is completed, next instruction code is again read out. By repeating this process, the instructions stored in the program ROM 119 is executed in order. When an interrupt demand is received from an interrupt control portion 116, an interrupt process is executed depending upon an interrupt factor.

The ALU 111 performs arithmetic and logical operation, such as addition and subtraction, AND, shift and so forth. Complex operation, such as multiplication, division and can realized by a combination of a plurality of steps of addition and so forth.

The general register group 112 temporarily stores process parameters, constants to be used by the programs for arithmetic process, transferring process. The PSW 113 is constituted of a plurality of flags indicative of result of execution of instructions and execution status. The PSW 113 is used as a branching condition for executing branching instructions by the program.

The bus control portion 114 receives an access demand generated by the disk controlling microcomputer 12 when the instruction executing portion 106 accesses an externally connected resource.

Next, discussion will be given for respective function blocks connected to the I/O bus 118. The program ROM 119 is a read only memory storing the instructions to be executed by the instruction executing portion 106 and outputting the instruction code corresponding to an instruction address supplied from the instruction executing portion. A timer 125 generates a PWM (pulse width modulation) pulse for motor speed control of the spindle motor within the HDA 18. Starting and Stopping operation of the spindle motor is controlled by program process by the instruction executing portion 106.

The host interface portion 120 realizes a bus interface terminal function to permit connection with a bus of a targeted host system 70 directly or indirectly through the buffer circuit, a register function for temporarily storing command and data supplied by the host system 70 for designating the operation of the hard disk drive, a status register function for indicating the operational states of the disk drive, and a data transferring function for transferring data between the buffer control portion 121.

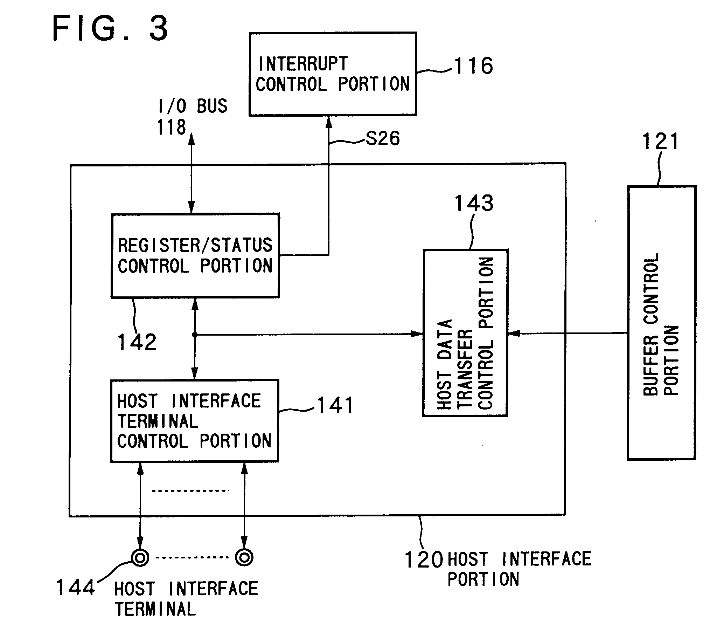

Fig. 3 is a block diagram of the host interface portion 120 of Fig. 1. The host interface portion 120 comprises a host interface terminal control portion 141 a register/status control portion 142, a host data transfer control portion 143 and a plurality of host interface terminals 144.

The host interface terminal control portion 141 controls input and output operation to the register/status control portion 142 or the host data transfer control portion 143 in synchronism with access via the host interface terminals 144 when access is made by the connected host system 70.

The register/status control portion 142 has a command register for storing respective of command information and various control data, a control register and a status register indicating the internal operational state as the hard disk drive. Each register is also accessible from the instruction executing portion 106 via the I/O bus 118. Also, when writing operation in the command register is performed from the host system, a command reception signal S26 is output to the interrupt control portion 116.

The host data transfer control portion 143 performs a transfer control for the buffer control portion 121 upon reading out of the disk data from the buffering RAM 13 or writing in the buffering RAM 13.

The buffer control portion 121 arbitrates access to the buffering RAM 13 from the host interface portion 120, the format control portion 122 and the instruction executing portion to realize a control of a preferential order.

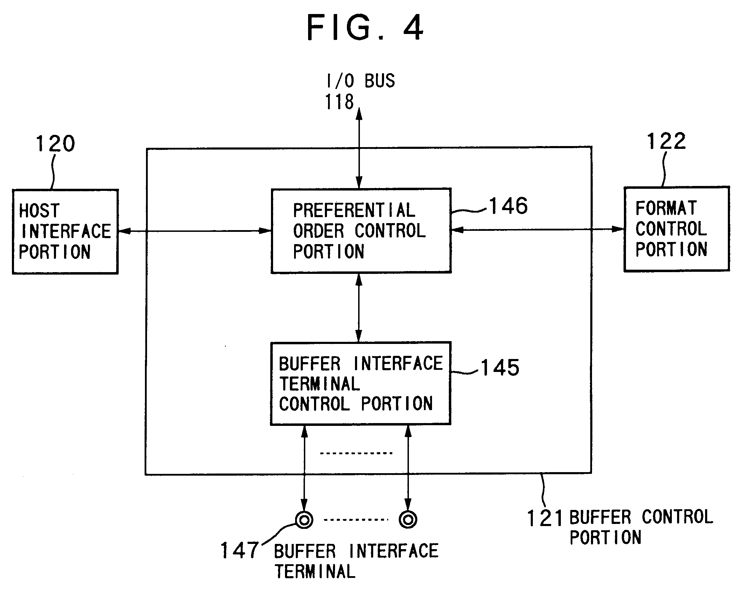

Fig. 4 is a block diagram of the buffer control portion 121 of Fig. 1. The buffer control portion 121 comprises a bus interface terminal control portion 145 and a preferential order control portion 146.

The buffer interface control portion 145 generates an access cycle for the buffering RAM 13 when an access factor for the buffering RAM 13 connected to the buffer interface terminal 147 and whereby controls read/write operation.

The preferential order control portion 146 is responsive to the occurrence of access demands from the host interface 120, the format control portion 122 and the instruction executing portion 106, to perform a preferential order control for selecting one of the access demand as an access factor. When three access demands occurs at the same time, the access right is assigned in the order to host interface portion 120, the format control portion 121 and the instruction executing portion 106.

The format control portion 122 performs serial-parallel conversion for data to be read/written out and in the disk. Also, the format control portion 122 controls read/write operation at a timing corresponding to the format of the disk. The format control portion 122 further performs formatting of the disk per se.

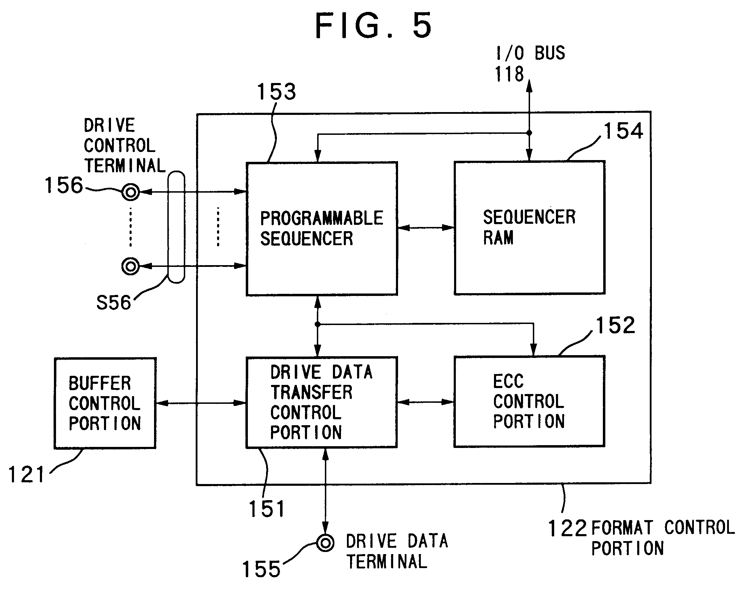

Fig. 5 is a block diagram of the format control portion 122 of Fig. 1. The format control portion 122 comprises a drive data transfer control portion 151, an ECC (Error Correction Code) control portion 152, a programmable sequencer 153 and a sequencer RAM 154. The programmable sequencer 153 is connected to the sequencer RAM 154, the drive data transfer control portion 151 and the ECC control portion 152. Also, the drive data transfer control portion 151 and the ECC control portion 152 are directly connected to each other.

The drive data transfer control portion 151 performs a serial data transfer with the read/write control portion 14 via the drive data terminal 155 and modification of format between the bit data and the bite data through serial-parallel conversion. The drive transfer control portion 151 further performs transfer control for the buffering control portion 121 upon writing the disk data in the buffering RAM 13 and reading from the buffering RAM 13.

The ECC control portion 152 performs generating process of an error correction code (ECC) upon disk data writing operation, and a bit error detection and correction process of the disk data based on the ECC during reading operation.

The programmable sequencer 153 performs sequence control by reading out a sequencer program loaded in the sequencer RAM 154 in order. The sequence control is initiated in synchronism with a synchronization pulse signal S56 of a sector signal input from the read/write control portion via a plurality of drive control terminals 156 and executes a process in order at timings synchronous to the format of the disk.

Also, conversely, at a timing in synchronism with the sequence control, a disk read signal and a disk write signal for controlling data reading and data writing are output via a plurality of the drive control terminal 56.

The sequencer RAM 154 stores a program to be executed by the programmable sequencer 153. To the sequencer RAM 154, a predetermined program is downloaded from the program ROM 119 via the I/O bus 118 through instruction process of the instruction executing portion 106 corresponding to a kind of command received from the host system 70.

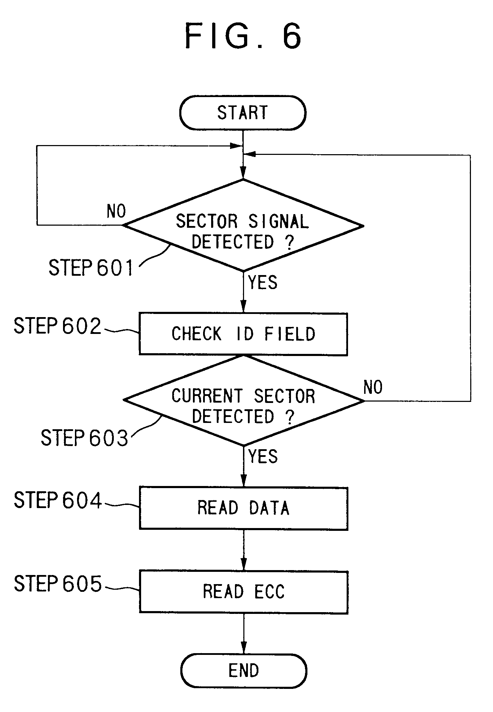

Fig. 6 shows a flowchart for illustrating the content of process of the sequencer program to be executed by the micro-sequencer 110 during disk data reading operation.

In the instruction process by the instruction executing portion 106 after reception of the command, the sequencer program for reading process is down-loaded to the sequencer RAM 154. Subsequently, the programmable sequencer initiates operation.

After initiation of operation, a waiting process for waiting the sector signal indicative of a sector start timing on the disk is performed (step 601) so that the operation timing of the programmable sequencer 153 is synchronized with the timing of the disk format.

When the sector signal is detected at the step 601, data in the ID field, i.e. a cylinder number, sector number and so forth are read out (step 602) to make judgement of detection of the current sector to be read by making reference to the number designated by the read command (step 603).

If the read out cylinder number and the sector number do not match with the number designated by the command, namely when the current sector is not detected, search for the sector is performed again by returning the process step 601.

On the other hand, when the read out cylinder number and the sector number match the number designated by the command, namely when the current sector is detected, data read process of the current sector is initiated (step 604). In the data read process at the step 604, reading process for the data field of the predetermined number of bites is performed continuously.

After completion of data reading, reading process for the ECC field is executed (step 605). Upon completion of this reading process for the ECC field, reading process for the disk is terminated.

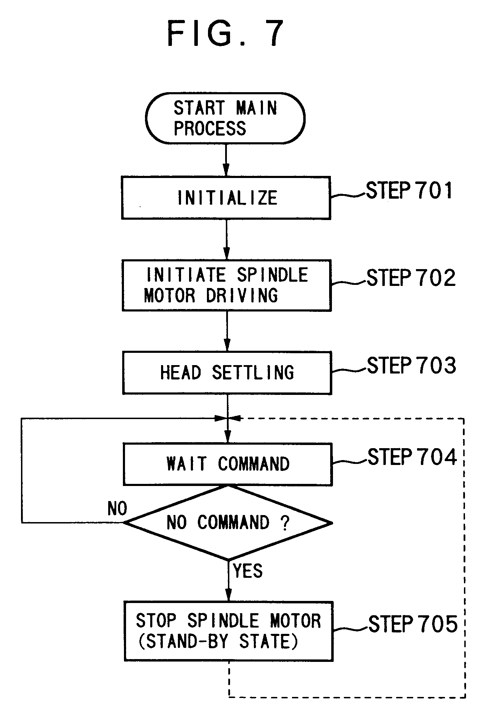

Next, discussion will be given for the operation of the drive control unit 10 under control by the microcomputer 12. Fig. 7 is a flowchart illustrating a content of the main process for drive control by a control program stored in the program ROM 19. After turning ON of power supply, the instruction executing portion 106 initiates reading out of necessary instruction codes from the program ROM 119 and thus initiates execution of the program.

At first, initialization for respective hardware, i.e. the host interface portion 120, the format control portion 122, the timer 125 and the interrupt control portion 116 is taken place (step 701). Subsequently, a predetermined parameter is set in the timer 125 to control the PWM pulse to initiate operation of the spindle motor (step 702). On the other hand, a predetermined parameter is set in the D/A converter 124 to settling the magnetic head to the predetermined track on the magnetic disk (step 703).

Thereafter, the interrupt control portion 116 is set at interruption enabling state, and the host interface 120 is set at a command reception enabling state to enter into a waiting state for the command (step 704).

When no command is input even after elapsing a given period, the PWM pulse of the timer 125 is controlled for stopping the spindle motor to move into a stand-by state (step 705). When command is input during the stand-by state, interrupt process for command reception is executed to release the stand-by state and subsequently, at the step 704, the command waiting state is entered.

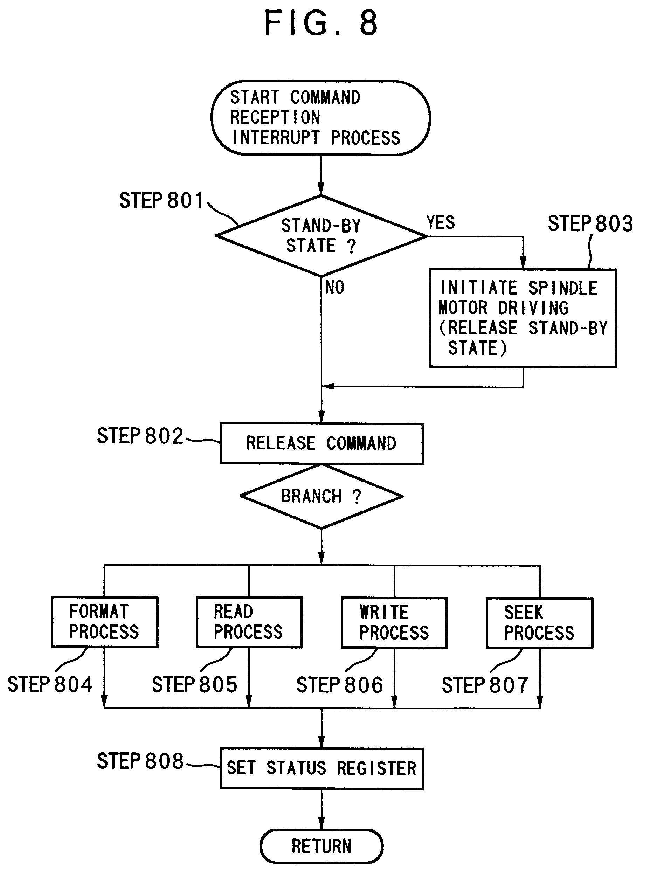

Fig. 8 is a flowchart illustrating a command reception interrupt process to be triggered by the command reception signal S26 generated when the command from the host system 70 is written in the command register of the register/status control portion 142 of the host interface portion 120.

Initially, status is checked if interruption is caused at the stand-by state or not (step 801). If interruption is caused at the stand-by state, the PWM pulse of the timer 125 is controlled to initiate operation of the spindle motor and thus to release the stand-by state (step 803).

When the interruption is caused not at the stand-by state or after releasing the stand-by state, the command is read out from the command register in the register/status control portion 142 of the host interface portion 120 and is interpreted for branching to the process corresponding to the content of the command (step 802).

In the process of the command for formatting, reading and writing, One of the programs stored in the program ROM to be executed by the programmable sequencer 153 is loaded in the sequencer RAM 154. Then, the loaded program is executed by starting the operation of the programmable sequencer 153.

In the formatting process (step 804), data writing process for writing the cylinder number, the sector number and so forth in the ID fields is performed in the programmable sequencer 153 in synchronism with the generation timing of the sector signal input from the read/write control portion 14 via the drive control terminal 156. Subsequently, the status register of the register/status control portion 142 is set at the command completion state and then process returns to the main process of Fig. 7 (step 808).

In the reading process (step 805), data reading from the predetermined cylinder and the sector portion designated by the command in synchronism with the generation timing of the sector signal input from the read/write control portion 14 via the drive control terminal 156, by the programmable sequencer 153.

The read disk data is fed to the read/write control portion 14 and temporarily stored in the buffering RAM 13 as the bite data via the drive data terminal 156. At this time, by the ECC control portion 152, the ECC data is calculated employing all disk data in the predetermined sector, read in order. Subsequently, the calculated ECC data and the ECC data read from the disk are compared for correction of the error data on the buffering RAM 13.

The data in the buffering RAM 13 is read out via the host interface terminal 144 in synchronism with reading operation of the host system 70. The content of the process to be performed by the programmable sequencer 153 during the reading process is as shown in Fig. 6.

Once reading process for all data in the predetermined sector is completed, the status register in the register/status control portion 142 is set at the command completion state to return to the main process (step 808).

In the writing process (step 806), by the programmable sequencer 153, data writing in the predetermined cylinder and sector position designated by the command is performed in synchronism with the generation timing of the sector signal input from the read/write control portion 14 via the drive control terminal 156.

At this time, in synchronism with the writing operation of the host system 70, the write data is temporarily stored in the buffering RAM 13 via the host interface terminal 144. The data stored in the buffering RAM 13 is read in synchronism with the operation timing of the disk, fed to the read/write control portion 14 via the drive data terminal 155 and then written in the disk.

On the other hand, in ECC control portion 152, the ECC data is arithmetically generated employing all of the disk data of the predetermined sector read from the buffering RAM 13 in order. The ECC data is then written in the disk. After completion of the foregoing process, the status register of the register/status control portion 142 is set in the command completion state. Then, the process is returned to the main process (step 808).

In the seek process (step 807), in order to shift the magnetic head to the cylinder designated by the command, a target cylinder number information is set as a control parameter to be used in the serve interrupt process which will be discussed later. Then, the status register in the register/status control portion 142 is set in the command completion state. Then, the process is returned to the main process (step 808).

By the subsequent servo interrupt process, the head is positioned at the predetermined cylinder. Normally, the above-mentioned format, read and write commands are executed after execution of the command for the seek process. In the drive control unit 10, the digital servo control is performed by the program process by the disk controlling microcomputer 12.

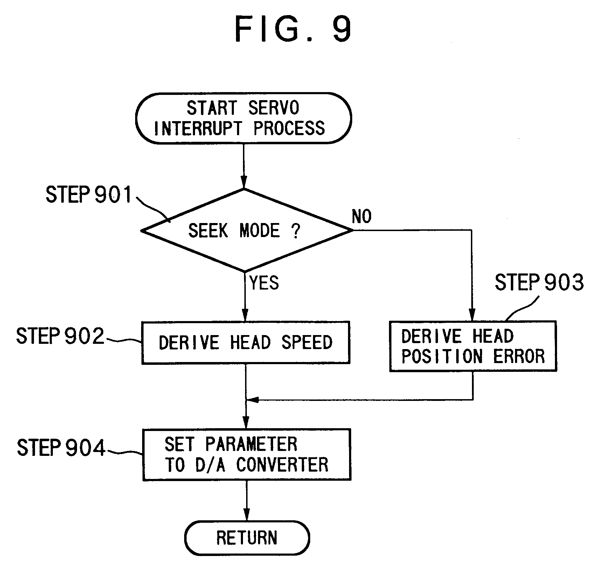

Fig. 9 is a flowchart illustrating a content of the servo interrupt process triggered by generation of the servo timing signal for positioning the head.

In the servo interrupt process, there are two modes, i.e. seek operation mode and follow operation mode. Immediately after execution of the command for the seek process, seek operation mode is recognized. On the other hand, after completion of settling to the target cylinder, the follow operation mode is recognized (step 901).

If the seek operation mode is recognized, a head speed calculation process is performed (step 902). On the other hand, when the follow operation mode is recognized, a head position error calculation process is performed (step 903).

At the step 902, on the basis of the value derived by A/D conversion of the drive current for the voice coil motor by the A/D converter 123 in synchronism with the generation timing of the servo timing signal S27, an acceleration of the magnetic head movement is calculated.

On the other hand, on the basis of the cylinder position information obtained via the read/write control portion 14, immediately preceding head motion speed is calculated, and the current motion speed of the head is calculated using the acceleration derived as set forth above. The head motion speed thus calculated is compared with a reference speed pattern for shifting the head to the predetermined cylinder to perform the head motion control by setting the drive current corresponding to the difference therebetween in the D/A converter 124.

At the step 903, the head position error is calculated on the basis of a value derived through A/D conversion of an offset voltage obtained from a servo burst information in synchronism with the generation timing of the servo timing signal by the A/D converter 123.

On the basis of the head position error, the head drive current for minimizing the offset is calculated. The derived drive current is set in the A/D converter 123 to perform follow control to the target position of the head with high precision.

The servo interrupt process is triggered any time during execution of the main process and execution of the command reception process. Accordingly, after completion of the process, the status immediately before initiation of the servo interruption is resumed.

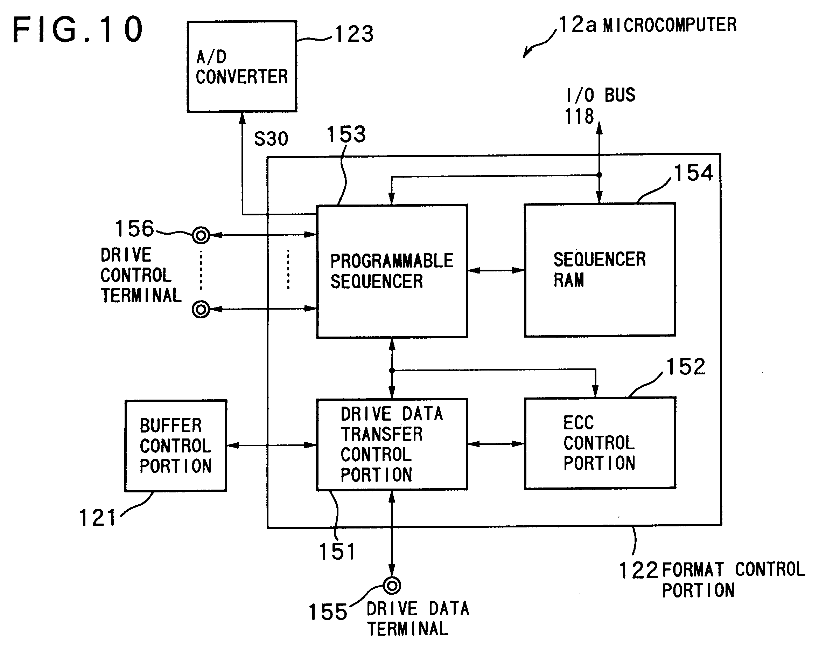

Next, discussion will be given for the second embodiment of a disk controlling microcomputer 12a. Fig. 10 shows the construction of the format control portion 122 of the second embodiment of the disk controlling microcomputer 12a.

The disk controlling microcomputer 12a is differentiated from the first embodiment of the microcomputer in that the timing output signal S30 of the format control portion 122 is input to the A/D converter 123. Other construction is the same as that shown in Fig. 1.

In this disk controlling microcomputer 12a, it is permitted to control the operation timing of the A/D converter 123 by the format control portion 122. Namely, by operating the programmable sequencer with the program stored in the sequencer RAM 154, the control signal from the drive control terminal 156 and the timing output signal S30 are controlled.

The timing output signal S30 is a signal for designating the conversion initiation timing of the A/D converter 123. In the programmable sequencer 153, by the program stored in the sequencer RAM 154, the timing output signal S30 is made active (logical value "1")at arbitrary timing to command initiation of conversion. By this timing output signal, the converting operation of the A/D converter 123 can be controlled at arbitrary timing.

Accordingly, when synchronization is applied to the programmable sequencer 153 by the synchronization pulse, such as the sector signal input from the read/write portion 14, the conversion initiation timing can be commanded to the A/D converter 123 at an arbitrary elapsed period after occurrence of synchronization. In the prior art, in order to designate the conversion initiation timing for the A/D converter 123, a separate circuit, such as a timer or so forth has been employed for designating the timing. In contrast, in the shown embodiment, by performing timing designation by the timing output signal S30 from the programmable sequencer, such separate circuit, such as the timer becomes unnecessary. Also, in the alternative, the timer may be used for other purpose.

Since the operation of the second embodiment is substantially identical to that of the first embodiment, except for the conversion initiation designation timing of the A/D converter 123, discussion for other operation and other components is neglected for maintaining the disclosure simple enough.

Namely, in the second embodiment of the microcomputer 12a, similarly to the first embodiment of the microcomputer 12, the command control process is performed corresponding to the command from the host system 70 by the program process of the instruction executing portion 106. Also, the magnetic head positioning process and the spindle motor starting and stopping process are performed by servo interrupt process.

It should be noted that although the shown embodiment has been discussed in terms of a hardware access system, in which the sector signal is employed as the disk control information, the present invention can also be realized by a software sector system, in which an address mark information is employed as the disk control information.

Also, the present invention is applicable either for a buried servo type, in which the servo information is arranged on a data face of the disk, or for a servo face servo type having a dedicated disk face for the servo information. Needless to say, the present invention is applicable for modern servo control, such as a split data field type, in which the servo information is also arranged in the data field, or a zone bit type and so forth.

On the other hand, it is possible that not only the conversion timing designation of the A/D converter as shown in the second embodiment, but also generation of various timing signal to be used internally by the microcomputer can be performed by the programmable sequencer 53. It is further possible to output the timing signal to the external terminal of the microcomputer.

As set forth above, the microcomputer according to the present invention paid attention to the fact that the command process and the head positioning control process are performed intermittently, and performs two control process with a single microprocessor. By this, the potential of the processor can be used at maximum effectiveness so that the control unit for the disk drive can be constructed with the minimized hardware construction. Also, since the present invention can normally be constructed with only digital circuits, it can be easily integrated in a form of LSI to reduce power consumption and provide general applicability.

Although the invention has been illustrated and described with respect to exemplary embodiment thereof, invention is applicable for modern servo control, such as a split data field type, in which the servo information is also arranged in the data field, or a zone bit type and so forth.

On the other hand, it is possible that not only the conversion timing designation of the A/D converter as shown in the second embodiment, but also generation of various timing signal to be used internally by the microcomputer can be performed by the programmable sequencer 53. It is further possible to output the timing signal to the external terminal of the microcomputer.

As set forth above, the microcomputer according to the present invention paid attention to the fact that the command process and the head positioning control process are performed intermittently, and performs two control process with a single microprocessor. By this, the potential of the processor can be used at maximum effectiveness so that the control unit for the disk drive can be constructed with the minimized hardware construction. Also, since the present invention can normally be constructed with only digital circuits, it can be easily integrated in a form of LSI to reduce power consumption and provide general applicability.

## Claims

1. A disk drive comprising:
a head-disk assembly (18) incorporating a disk, a head for reading and writing data out and in said disk, and drive means for said disk and said head;
drive control means (10) for controlling operation of said head-disk assembly and read/write operation with respect to said disk from an external system (70);
said drive control means (10) including a single disk controlling microcomputer (12), which comprises:
instruction storage means (119) for storing instructions for controlling the operation of the head disk assembly (18) and the operation of reading and writing;
instruction executing means (106) for reading out the instruction from said storage means in order, servo control process for positioning said head and a command control process corresponding to the read/write command from said external system (70);
format control means (122) connected to a said head-disk assembly (18) and said instruction executing portion (106) and controlling the reading and writing operation for said disk and conversion from a serial data into a parallel data; and
interface means (120) connected to said instruction executing portion (106) and said external system (70) for controlling operation of command reception from the said external device and a data transfer process to the external system (70).

2. A disk drive as set forth in claim 1, wherein said disk controlling microcomputer (12) comprises:
an A/D converter (123) for inputting control information read from said disk of said head-disk assembly (18) and necessary for head positioning servo control; and
a D/A converter (124) for outputting a head positioning servo control information calculated on the basis of said control information necessary for servo control.

3. A disk drive as set forth in claim 2, wherein
said format control means (122) is electrically connected to said A/D converter (123) and said format control means includes means (122) for outputting a timing signal designating conversion initiation timing of said A/D converter (123).

4. A disk drive as set forth in claim 1, wherein
said drive control means (10) includes buffer means (13) for temporarily storing write data from said external system and read data from said disk for adjusting transfer speed and transfer timing between said external system and said disk; and
said disk controlling microcomputer (12) includes buffer control means (121) connected to said buffer means (13) for controlling access to said buffer means from said instruction executing means, said format control means (122) and said interface means (120).

5. A disk drive as set forth in claim 1, wherein said format control means (122) comprises:
drive data transfer means (151) for performing data transfer process during read/write operation for said disk and serial-parallel conversion of data;
error correction control means (152) for performing error code generating process during data writing in said disk and data error detection and correction process based on said error code;
storage means (154) for storing instructions for controlling reading and writing by loading said instructions by an instruction execution control signal of said instruction executing means (106); and
control means (153) for reading out the instructions stored in said storage means (154) and controlling reading and writing operation, and
said interface means (120) comprises:
means (142) for storing read/write command fed from said external system and notifying reception of said read/write command to said instruction executing means (106).

6. A disk drive as set forth in claim 4, wherein said buffer control means (121) comprises:
means (146) for performing preferential order control for assigning access right for said instruction executing means (106), said format control means (122) and said interface means (120) at the occurrence of access demand therefrom.

7. A disk drive as set forth in claim 1, wherein
said drive control means (10) includes buffer means (13) for temporarily storing write data from said external system (70) and read data from said disk for adjusting transfer speed and transfer timing between said external system and said disk;
said disk controlling microcomputer (12) includes buffer control means (121) connected to said buffer means (13) for controlling access to said buffer means from said instruction executing means (106), said format control means (122) and said interface means (120);
said format control means (122) comprises:
drive data transfer means (151) for performing data transfer process during read/write operation for said disk and serial-parallel conversion of data;
error correction control means (152) for performing error code generating process during data writing in said disk and data error detection and correction process based on said error code;
storage means (154) for storing instructions for controlling reading and writing by loading said instructions by an instruction execution control signal of said instruction executing means (106); and
control means (153) for reading out the instructions stored in said storage means (154) and controlling reading and writing operation;
said interface means (120) comprises:
means (142) for storing read/write command fed from said external system and notifying reception of said read/write command to said instruction executing means (106); and
said buffer control means (121) comprises:
means (146) for performing preferential order control for assigning access right for said instruction executing means (106), said format control means (122) and said interface means (120) at the occurrence of access demand therefrom.

8. A disk drive as set forth in claim 1, wherein said disk controlling microcomputer (12) comprises:
interrupt control means (116) inputting the command reception signal from said interface means (120) or a servo control signal read from said disk of said head-disk assembly (18) for outputting an interrupt demand for command control process or servo control process to said instruction executing means (106) corresponding to input command reception signal or said servo control signal.

9. A disk controlling microcomputer for a disk drive, controlling operation of a head-disk assembly (18) including a disk, a head for reading and writing data with respect to said disk and drive means for said disk and said head, and read/write operation of an external system (70) with respect to said disk, comprising:
instruction storage means (119) for storing instructions for controlling the operation of the head disk assembly (18) and the operation of reading and writing;
instruction executing means (106) for reading out the instruction from said storage means (119) in order, servo control process for positioning said head and a command control process corresponding to the read/write command from said external system (70);
format control means (122) connected to a said head-disk assembly (18) and said instruction executing portion (106) and controls the reading and writing operation for said disk and conversion from a serial data into a parallel data; and
interface means (120) connected to said instruction executing portion (106) and said external system (70) for controlling operation of command reception from the said external device and a data transfer process to the external system (70).

10. A disk controlling microcomputer as set forth in claim 9, which further comprises:
an A/D (123) converter for inputting control information read from said disk of said head-disk assembly (18) and necessary for head positioning servo control; and
a D/A (124) converter for outputting a head positioning servo control information calculated on the basis of said control information necessary for servo control.

11. A disk controlling microcomputer as set forth in claim 10, wherein
said format control means (122) is electrically connected to said A/D converter (123) and said format control means (122) includes means for outputting a timing signal designating conversion initiation timing of said A/D converter.

12. A disk controlling microcomputer as set forth in claim 9, which further comprises buffer control means (121) connected to buffer means (13) for controlling access to said buffer means (13) from said instruction executing means (106), said format control means (122) and said interface means (120), said buffer means (13) temporarily storing write data from said external system (70) and read data from said disk for adjusting transfer speed and transfer timing between said external system (70) and said disk.

13. A disk controlling microcomputer as set forth in claim 9, wherein
said format control means (122) comprises:
drive data transfer means (151) for performing data transfer process during read/write operation for said disk and serial-parallel conversion of data;
error correction control means (152) for performing error code generating process during data writing in said disk and data error detection and correction process based on said error code;
storage means (154) for storing instructions for controlling reading and writing by loading said instructions by an instruction execution control signal of said instruction executing means (106); and
control means (153) for reading out the instructions stored in said storage means (154) and controlling reading and writing operation, and
said interface means (120) comprises:
means (142) for storing read/write command fed from said external system (70) and notifying reception of said read/write command to said instruction executing means (106).

14. A disk controlling microcomputer as set forth in claim 12, wherein said buffer control means (121) comprises:
means (146) for performing preferential order control for assigning access right for said instruction executing means (106), said format control means (122) and said interface means (120) at the occurrence of access demand therefrom.

15. A disk controlling microcomputer as set forth in claim 9, which further comprises
buffer control means (121) connected to buffer means (13) for controlling access to said buffer means from said instruction executing means (106), said format control means (122) and said interface means (120), said buffer means (13) temporarily storing write data from said external system (70) and read data from said disk for adjusting transfer speed and transfer timing between said external system (70) and said disk;
said format control means (122) comprises:
drive data transfer means (151) for performing data transfer process during read/write operation for said disk and serial-parallel conversion of data;
error correction control means (152) for performing error code generating process during data writing in said disk and data error detection and correction process based on said error code;
storage means (154) for storing instructions for controlling reading and writing by loading said instructions by an instruction execution control signal of said instruction executing means (106); and
control means (153) for reading out the instructions stored in said storage means (154) and controlling reading and writing operation;
said interface means (120) comprises:
means (142) for storing read/write command fed from said external system and notifying reception of said read/write command to said instruction executing means (106); and
said buffer control means (121) comprises:
means (146) for performing preferential order control for assigning access right for said instruction executing means (106), said format control means (122) and said interface means (120) at the occurrence of access demand therefrom.

16. A disk controlling microcomputer as set forth in claim 9, which further comprises
interrupt control means (116) inputting the command reception signal from said interface means (120) or a servo control signal read from said disk of said head-disk assembly (18) for outputting an interrupt demand for command control process or servo control process to said instruction executing means (106) corresponding to input command reception signal or said servo control signal.

17. A disk drive comprising:
a disk drive system (18) including a head means for writing and reading information in and from a selected track on a disk; and
a single disk drive controlling microcomputer (12) for controlling operation of said disk drive system, said disk drive controlling microcomputer being selectively operative in periodic mode for registering said head means to said selected track of said disk and an on-demand mode, in response to an external demand for reading and writing, for making access of said selected track for reading and writing information therein and therefrom, and said microcomputer controlling selection of said periodic mode and said on-demand mode depending upon presence and absense of said external demand.

18. A disk drive comprising:
a disk drive system (18) including a head means for writing and reading information in and from a selected track on a disk; and
a single disk drive controlling microcomputer (12) for controlling operation of said disk drive system, said disk drive controlling microcomputer being selectively operative in periodic mode for registering said head means to said selected track of said disk and an on-demand mode, in response to an external demand for reading and writing, for making access of said selected track for reading and writing information therein and therefrom, and said microcomputer normally executing said periodic mode process in periodic basis and interrupting said periodic mode process for executing said on-demand mode process in response to said external demand.
